(19) **Europäisches Patentamt / European Patent Office / Office européen des brevets**

(11) **EP 4 442 440 B1**

(12) **EUROPEAN PATENT SPECIFICATION**

(45) Date of publication and mention
of the grant of the patent:
**05.08.2026 Bulletin 2026/32**

(21) Application number: **22898570.1**

(22) Date of filing: **22.11.2022**

(51) International Patent Classification (IPC):
**B29C 70/06** (2006.01)    **B29C 70/30** (2006.01)
**B29C 70/12** (2006.01)    **B29C 70/08** (2006.01)
**D04H 1/4242** (2012.01)    **D04H 1/435** (2012.01)
**D04H 1/4374** (2012.01)    **D04H 1/64** (2012.01)
**D04H 1/732** (2012.01)

(52) Cooperative Patent Classification (CPC):
**B29C 70/12; B29C 70/08; D04H 1/4242;
D04H 1/435; D04H 1/4374; D04H 1/64; D04H 1/732**

(86) International application number:
**PCT/JP2022/043167**

(87) International publication number:
**WO 2023/095787 (01.06.2023 Gazette 2023/22)**

(54) **POROUS BODY**

**PORÖSER KÖRPER**

**CORPS POREUX**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.11.2021 JP 2021192794**

(43) Date of publication of application:
**09.10.2024 Bulletin 2024/41**

(73) Proprietor: **Toray Industries, Inc.
Tokyo 103-8666 (JP)**

(72) Inventors:
• **KAWAHARA, Kota
Iyo-gun, Ehime 791-3193 (JP)**
• **MATSUTANI, Hiroaki
Iyo-gun, Ehime 791-3193 (JP)**
• **HONMA, Masato
Iyo-gun, Ehime 791-3193 (JP)**

(74) Representative: **Kador & Partner Part mbB
Corneliusstraße 15
80469 München (DE)**

(56) References cited:
**JP-A- 2006 142 819    JP-A- 2010 155 460
JP-A- 2018 104 482    JP-A- 2020 514 131
US-B1- 6 306 474**

EP 4 442 440 B1

**Description**

TECHNICAL FIELD

The present invention relates to a porous body of a fiber-reinforced plastic for use in industrial products such as sporting goods, electronic device housings, and building components.

BACKGROUND ART

In recent years, rigidity and lightweightness have become increasingly important in industrial products such as electronic device housings and sporting goods, and there is an increasing demand for structural components having excellent specific strength and specific rigidity. In particular, structural components with internal voids are extremely effective in reducing the weight of the products, and, as structural components with excellent lightweightness and mechanical properties, there are fiber-reinforced plastic structures containing reinforcing fibers, a matrix resin, and voids (Patent Document 1). In addition, as structural components with flexibility as well as lightweightness, there are structures containing a resin showing rubber elasticity (Patent Document 2).

PRIOR ART DOCUMENTS

[Patent Documents]

   [Patent Document 1] WO 2017/110528
   [Patent Document 2] WO 2018/117188

JP2018104482A discloses a porous structure comprising first fibers, second fibers having low tensile elasticity modulus than that of the first fibers and a resin.

SUMMARY OF THE INVENTION

PROBLEMS TO BE SOLVED BY THE INVENTION

However, structures in which voids are formed as in Patent Document 1 have had a problem in that they have insufficient impact strength. In addition, although structures containing a resin showing rubber elasticity as in Patent Document 2 exhibit excellent impact strength due to the rubber elasticity of the resin, reinforcing fibers cannot be effectively fixed in such structures, so that the resulting insufficiency of the reinforcing effect by the reinforcing fibers leads to insufficient rigidity and strength, which has been problematic.
The present invention was made in view of the above problems, and an object of the present invention is to provide a porous body of a fiber-reinforced plastic with excellent lightweightness, impact strength, and rigidity.

MEANS FOR SOLVING THE PROBLEMS

The present invention provides a porous body as set out in claim 1.

EFFECT OF THE INVENTION

By the present invention, a porous body with excellent lightweightness, impact strength, and rigidity can be obtained.

BRIEF DESCRIPTION OF THE DRAWINGS

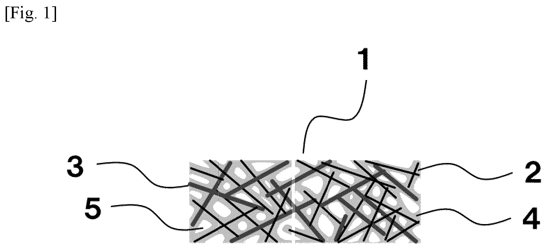

Fig. 1 is a schematic diagram illustrating a cross-sectional structure of the porous body of the present invention.

MODE FOR CARRYING OUT THE INVENTION

In order to facilitate understanding, the present invention is described below with reference to the drawing as appropriate. However, the present invention is not limited by the drawing.

The porous body of the present invention is the so-called fiber-reinforced plastic, which comprises reinforcing fibers and a resin. The porous body comprises: carbon fibers (A) at more than 50% by weight and not more than 99% by weight, and organic fibers (B) having a tensile elongation at break of 2.5 to 100% at not less than 1% by weight and less than 50% by weight, as the reinforcing fibers; and a resin (C); the reinforcing fibers being fixed by the resin (C). The carbon fibers (A) have excellent rigidity and strength, and, by the inclusion of the carbon fibers (A) at more than 50% by weight and not more than 99% by weight as reinforcing fibers, the reinforcing effect derived from the carbon fibers (A) can be sufficiently obtained, and hence excellent rigidity and strength can be imparted to the porous body. Compared to the carbon fibers (A), the organic fibers (B) have relatively higher ductility and tensile elongation at break, so that they are less likely to break due to an impact. Therefore, since fracture of the porous body containing the organic fibers (B) by an impact requires fracture of the resin (C) by the organic fibers (B) or withdrawal of the organic fibers (B) from the resin (C), the porous body can have excellent impact strength. By the inclusion of the organic fibers (B) as reinforcing fibers at not less than 1% by weight, the reinforcing effect derived from the organic fibers (B) can be sufficiently obtained, and hence excellent impact strength can be imparted to the porous body. By the inclusion of the organic fibers (B) at less than 50% by weight, the relative content of the carbon fibers (A) to the organic fibers (B) increases, so that the excellent rigidity and strength imparted by the carbon fibers (A) and the excellent impact strength imparted by the organic fibers (B) can both be achieved. The content of the carbon fibers (A) is more preferably 60 to 80% by weight, and the content of the organic fibers (B) is more preferably 20 to 40% by weight.

Further, since the organic fibers (B) have a tensile elongation at break of not less than 2.5%, fiber breakage at the time of impact can be sufficiently suppressed, so that the porous body can have excellent impact strength. On the other hand, since the organic fibers (B) have a tensile elongation at break of not more than 100%, elongation of the organic fibers (B) at the time of impact can be suppressed, which allows bearing of a sufficient load and imparting of excellent impact strength. The organic fibers (B) have a tensile elongation at break of preferably 2.5 to 30%, more preferably 2.5 to 15%.

The tensile elongation at break (%) of the organic fibers (B) can be determined by the following method. In a room under normal conditions (20°C, 65% RH), a tensile test of a single fiber is carried out at a chuck interval of 250 mm and a tensile rate of 300 mm/minute, and the length at the time of fiber breakage is measured (breakage in the vicinity of a chuck is regarded as chucking breakage, and excluded from the data). Calculation is performed to two decimal places according to the following equation, and the calculated value is rounded to one decimal place. The average for the number of data n = 3 is calculated to determine the tensile elongation at break in the present invention.

Tensile elongation at break (%) = [(length (mm) at the time of breakage - 250) / 250] $\times$ 100

The porous body of the present invention has a porosity of 10 to 95% by volume. Since the porosity is not less than 10% by volume, the specific gravity is small, and hence sufficient lightweightness can be obtained. On the other hand, since the porosity is not more than 95% by volume, the reinforcing effect by the reinforcing fibers and the resin can be sufficiently obtained, so that the porous body can have excellent mechanical properties. The porosity is more preferably 20% by volume to 90% by volume.

Fig. 1 is a schematic diagram illustrating a cross-sectional structure of the porous body of the present invention. As illustrated in Fig. 1, the porous body 1 of the present invention comprises carbon fibers 2, organic fibers 3, a resin 4, and voids 5. The carbon fibers 2 and the organic fibers 3 are fixed with the resin 4.

In the porous body of the present invention, the organic fibers (B) are preferably uniformly dispersed together with the carbon fibers (A). The uniform dispersion in the present invention means that the coefficient of variation of the number of carbon fibers (A) crossing with randomly selected organic fibers (B) is not more than 50%. The crossing in the present invention means a state in which reference organic fibers (B) are found crossing with carbon fibers (A) in a two-dimensional plane observed, wherein these do not necessarily need to be in contact with each other. A part containing a relatively small amount of carbon fibers (A) is a weak part in terms of strength and rigidity, and a part containing a relatively small amount of organic fibers (B) is a weak part in terms of the impact strength, where fiber breakage is likely to occur. Thus, because of the uniform dispersion of the organic fibers (B) with the carbon fibers (A), the porous body can be free of local weak parts, and can have both excellent rigidity and impact strength. The coefficient of variation of the number of carbon fibers (A) crossing with organic fibers (B) is calculated by randomly selecting five organic fibers (B) and performing calculation according to the following equation based on the number, $n_i$, of carbon fibers (A) crossing with the organic fibers (B) in the selected areas. In cases where a large number of carbon fibers (A) are crossing with organic fibers (B), a continuous 1-mm area may be selected from five random sites of the organic fibers (B), and the number of carbon fibers (A) crossing with the organic fibers (B) in the selected areas may be used instead.

$$N = \frac{1}{5} \sum_{i=1}^{5} n_i$$

$$\text{Coefficient of Variation (\%)} = \frac{100}{N} \sqrt{\frac{1}{5} \sum_{i=1}^{5} (n_i - N)^2}$$

Preferably, in the porous body of the present invention, intersections of the reinforcing fibers are bonded by the resin (C), and voids of the porous body are formed as parts where neither the reinforcing fibers nor the resin (C) are present. Typically, a large number of voids are scattered in the porous body. Since such voids are formed, the specific gravity can be reduced, and excellent mechanical properties can be obtained while achieving a light weight. As a result, a load applied to the porous body is dispersed through the resin and the contact points, and the reinforcing fibers bear the load to achieve excellent mechanical properties. Further, when the reinforcing fibers are not broken by an impact, fracture of the porous body by the impact requires fracture of the resin by the reinforcing fibers or withdrawal of the reinforcing fibers from the resin at the contact points. The excellent impact strength can therefore be achieved. The reinforcing effect by the reinforcing fibers can be sufficiently obtained because of the bonding of the reinforcing fibers by the resin.

In addition, at least some of the intersections of the reinforcing fibers, which are present in a large number, are preferably formed by crossing of monofilaments of carbon fibers (A) with other fibers. The other fibers herein mean carbon fibers (A) other than the above carbon fibers (A), or organic fibers (B), and the other fibers may be either in the state of monofilaments or fiber bundles. Therefore, the load applied to the porous body is dispersed in the carbon fibers (A), which have excellent strength and rigidity, so that the porous body can have excellent strength and rigidity. Further, at least some of the intersections of the reinforcing fibers, which are present in a large number, are preferably formed by crossing of monofilaments of organic fibers (B) with other fibers. The other fibers herein mean organic fibers (B) other than the above organic fibers (B), or carbon fibers (A), and the other fibers may be either in the state of monofilaments or fiber bundles. Therefore, a load applied to the porous body is dispersed in the organic fibers (B), which hardly break, and fracture of the resin (C) or withdrawal of the organic fibers (B) from the resin (C) occurs at the time of impact, so that the porous body can have excellent impact strength.

The reinforcing fibers constituting the intersections preferably form an average two-dimensional orientation angle of 10 to 80°. The two-dimensional orientation angle in the present invention is defined as the angle in the acute-angle side, which is within the range of 0° to 90°, out of the angles formed between crossing monofilaments. Since the average two-dimensional orientation angle is 10 to 80°, isotropy can be imparted to the mechanical properties. Further, due to the isotropic presence of the reinforcing fibers, fracture of the resin (C) or withdrawal of the reinforcing fibers from the resin (C) occurs irrespective of the direction of propagation of cracks at the time of impact. Therefore, the porous body can have excellent impact strength. The average two-dimensional orientation angle is more preferably 30 to 60°, still more preferably 40 to 50°.

The observation method for measuring the two-dimensional orientation angle is not limited, and may be, for example, a method in which orientation of the reinforcing fibers is observed from the surface of a component. In this case, the surface of the porous body may be polished to expose the reinforced fibers, to enable easier observation of the reinforcing fibers. Another example is a method in which an orientation image of the reinforcing fibers is taken by X-ray CT transmission observation. In cases where the reinforcing fibers have high radiolucency, tracer fibers may be preliminarily mixed in the reinforcing fibers, or a tracer agent may be applied to the reinforcing fibers, to enable easier observation of the reinforcing fibers, which is preferred. In cases where the observation is difficult in the above methods, for example, the porous body may be placed at high temperature in a furnace or the like to remove the resin component by burning, and then orientation of the remained reinforcing fibers is observed using an optical microscope or an electron microscope. The average two-dimensional orientation angle is measured by the following procedure. Specifically, the average two-dimensional orientation angle is measured from all monofilaments crossing with a randomly selected monofilament. In cases where, for example, there are a large number of other monofilaments crossing with a certain monofilament, 20 monofilaments may be randomly selected from these other crossing monofilaments, and then subjected to the measurement to determine an arithmetic average to be used as an alternative. This measurement is repeated a total of five times using different monofilaments as references, and the arithmetic average is calculated therefrom to determine the average two-dimensional orientation angle.

The porous body of the present invention preferably comprises 10 to 95% by weight of the resin (C) with respect to 5 to 90% by weight of a total of the carbon fibers (A) and the organic fibers (B). Since the total amount of the carbon fibers (A) and the organic fibers (B) is not less than 5 parts by weight, and the amount of the resin (C) is not more than 95 parts by weight, the reinforcing effect derived from the carbon fibers (A) and the organic fibers (B) can be sufficiently obtained, and hence excellent mechanical properties can be achieved. On the other hand, since the total amount of the carbon fibers (A) and the organic fibers (B) is not more than 90 parts by weight, and the amount of the resin (C) is not less than 10 parts by weight, the reinforcing fibers can sufficiently adhere to each other through the resin (C), and hence a sufficient reinforcing effect by the reinforcing fibers can be obtained.

The porous body of the present invention preferably has a density of 0.02 to 0.9 g/cm³. Since the density is not less than 0.02 g/cm$^3$, the porous body can have sufficient mechanical properties. Since the density is not more than 0.9 g/cm$^3$, sufficient lightweightness can be achieved, and hence the porous body can have excellent mechanical properties while achieving a light weight.

In the present invention, the carbon fibers (A) preferably have an average fiber length of 1 to 15 mm. Since the carbon fibers (A) have an average fiber length of not less than 1 mm, the reinforcing effect by the carbon fibers (A) can be sufficiently obtained, so that excellent rigidity can be imparted to the porous body. On the other hand, since the carbon fibers (A) have an average fiber length of not more than 15 mm, the carbon fibers (A) are hardly bent in the porous body, so that excellent rigidity can be imparted to the porous body by sufficiently taking the advantage of the high rigidity of the carbon fibers (A). The carbon fibers (A) more preferably have an average fiber length of 2 and 13 mm.

The organic fibers (B) preferably have an average fiber length of 4 to 20 mm. Since the organic fibers (B) have an average fiber length of not less than 4 mm, the organic fibers (B) have a large number of contact points with other fibers and the resin. As a result, fracture of the resin or withdrawal of the organic fibers (B) from the resin occurs at the time of impact, so that the porous body can have excellent impact strength. On the other hand, since the organic fibers (B) have an average fiber length of not more than 20 mm, the number of organic fibers (B) per unit volume can be sufficiently large. As a result, fracture of the resin or withdrawal of the organic fibers (B) from the resin extensively occurs at the time of impact. The organic fibers (B) more preferably have an average fiber length of 6 and 15 mm.

The average fiber length of the reinforcing fibers can be calculated by removing the matrix resin component by a method such as burning or elution, randomly selecting 400 remained reinforcing fibers, measuring their lengths in 100-μm units, and obtaining the average length therefrom.

Examples of the carbon fibers (A) include PAN-based, rayon-based, lignin-based, and pitch-based carbon fibers.

Examples of the organic fibers (B) include fibers obtained by spinning of resins, including polyolefin resins such as polyethylene and polypropylene; polyamide resins such as nylon 6, nylon 66, and aromatic polyamide; polyester resins such as polyethylene terephthalate, polybutylene terephthalate, and liquid crystal polyester; polyaryl ether ketone resins such as polyether ketone; polyether sulfone; polyarylene sulfide; and fluororesins. Two or more of these fibers may be used in combination. In particular, from the viewpoint of suppressing fiber breakage at the time of impact, the organic fibers (B) in the present invention are preferably selected from polyester resins, polyaryl ether ketone resins, and polyarylene sulfide resins.

These fibers may be surface-treated. Examples of the surface treatment include not only deposition of a metal as a conductor, but also treatment with a coupling agent, treatment with a sizing agent, treatment with a binder, and treatment by adhesion of an additive.

In the present invention, the organic fibers (B) preferably have a diameter of 15 to 50 μm. Since the organic fibers (B) have a diameter of not less than 15 μm, the organic fibers (B) can have a sufficiently high withstanding load due to an increased cross-sectional area, and breakage of the organic fibers (B) due to the load at the time of impact can be sufficiently suppressed, so that the porous body can have excellent impact strength. Since the organic fibers (B) have a diameter of not more than 50 μm, the number of organic fibers (B) per unit volume can be sufficiently large. As a result, fracture of the resin or withdrawal of the organic fibers (B) from the resin extensively occurs at the time of impact, so that the porous body can have excellent impact strength.

In the present invention, the organic fibers (B) preferably have a tensile strength of 1 to 6 GPa. Since the tensile strength is within this range, breakage of the organic fibers (B) at the time of impact can be sufficiently suppressed, so that the porous body can have excellent impact strength.

In the present invention, the resin (C) may be either a thermoplastic resin or a thermosetting resin, or may be a resin prepared by blending both of these.

Examples of the thermoplastic resin include thermoplastic resins selected from crystalline resins such as "polyesters such as polyethylene terephthalate (PET), polybutylene terephthalate (PBT), polytrimethylene terephthalate (PTT), polyethylene naphthalate (PEN), and liquid crystal polyester; polyolefins such as polyethylene (PE), polypropylene (PP), and polybutylene; polyoxymethylene (POM); polyamide (PA); polyarylene sulfides such as polyphenylene sulfide (PPS); polyketone (PK); polyether ketone (PEK); polyether ether ketone (PEEK); polyether ketone ketone (PEKK); polyether nitrile (PEN); fluororesins such as polytetrafluoroethylene; and liquid crystal polymers (LCP)"; amorphous resins such as "styrene resins, polycarbonate (PC), polymethyl methacrylate (PMMA), polyvinyl chloride (PVC), polyphenylene ether (PPE), polyimide (PI), polyamide imide (PAI), polyether imide (PEI), polysulfone (PSU), polyether sulfone, and polyarylate (PAR)"; phenolic resins; phenoxy resins; polystyrene, polyolefin, polyurethane, polyester, polyamide, polybutadiene, polyisoprene, fluororesin, or acrylonitrile thermoplastic elastomers and other thermoplastic elastomers; and copolymers and modified products thereof. In particular, from the viewpoint of the external surface appearance, amorphous resins such as polycarbonate or styrene resins are preferred. From the viewpoint of the continuous-use temperature, polyether ether ketone is preferred. From the viewpoint of the chemical resistance, fluororesins are preferably used. In the porous body of the present invention, the resin (C) is more preferably a thermoplastic resin selected from polyolefin resins, polyamide resins, and polyarylene sulfide resins. Specifically, from the viewpoint of the lightweightness, polyolefin resins are preferred. From the viewpoint of the strength, polyamide resins are preferred. From the viewpoint of the heat resistance, polyarylene sulfide resins are preferably used.

Examples of the thermosetting resin include unsaturated polyester resins, vinyl ester resins, epoxy resins, phenolic resins, acrylic resins, urea resins, melamine resins, and thermosetting polyimide resins; copolymers and modified products thereof; and resins prepared by blending any of these. In the porous body of the present invention, the resin (C) is more preferably a thermosetting resin selected from epoxy resins, phenolic resins, and acrylic resins. Specifically, from the viewpoint of the strength, epoxy resins are preferred. From the viewpoint of the heat resistance, phenolic resins are preferred. From the viewpoint of the impact strength, acrylic resins are preferably used.

As long as the object of the present invention is not impaired, the matrix resin may contain an impact resistance improver such as an elastomer or a rubber component; and other fillers and additives. Examples of the fillers and additives include inorganic fillers, flame retardants, conductivity-imparting agents, crystal nucleating agents, ultraviolet absorbers, antioxidants, damping agents, antimicrobial agents, insect repellents, deodorants, color inhibitors, heat stabilizers, release agents, antistatic agents, plasticizers, lubricants, colorants, pigments, dyes, blowing agents, foam control agents, and coupling agents.

The porous body of the present invention preferably has a Charpy impact strength of 10 to 100 kJ/m$^2$. Since the Charpy impact strength is not less than 10 kJ/m$^2$, the limitation in the practical application of the porous body can be reduced. Since the Charpy impact strength is not more than 100 kJ/m$^2$, sufficient impact strength can be achieved without impairing the lightweightness of the porous body. The porous body has a Charpy impact strength of more preferably 15 to 90 kJ/m$^2$, still more preferably 20 to 80 kJ/m$^2$. The Charpy impact strength can be determined according to JIS K 7111 (2006) by an edgewise impact test using an unnotched test piece having a length of $80 \pm 2$ mm, width of $10.0 \pm 0.2$ mm, and thickness of $4.0 \pm 0.2$ mm.

Another aspect of the present invention is a composite structure comprising: the porous body of the present invention; and a fiber-reinforced plastic containing continuous reinforcing fibers; the fiber-reinforced plastic being placed on a surface of the porous body. Because of the fiber-reinforced plastic on the surface, the composite structure of the present invention can have rigidity, impact strength, and the like that cannot be achieved by the porous body of the present invention alone. Further, since at least part of the composite structure is composed of the porous body of the present invention, the composite structure can have excellent lightweightness.

Examples of applications of the porous body of the present invention include sporting goods, electronic device housings, and building components. Since the porous body of the present invention has excellent lightweightness, rigidity, and impact strength, an excellent balance can be achieved between the lightweightness and the repulsive force when it is used in sporting goods, so that the porous body can be expected to be useful for improvement of the performance of the sporting goods. Further, since an excellent balance can be achieved between the lightweightness and the rigidity required for the maintenance of a shape as an electronic device housing or a building component, the porous body can be expected to be useful for improvement of the portability of electronic device housings, and for increasing the height of buildings. In addition, since an excellent balance can be achieved between the lightweightness and the impact resistance in sporting goods, electronic device housings, and building components, the porous body can be expected to be useful for suppressing damage caused by dropping, impact, or the like while the lightweightness is achieved.

EXAMPLES

The present invention is described below in more detail by way of Examples. However, the scope of the present invention is not limited to the following Examples.

(1) Measurement of Weight Content of Resin (C), and Volume Content of Voids in Porous Body

A porous body was formed from a sheet-like base material without voids, prepared by stacking resin sheets and fiber mats. The weight content of the resin (C) was calculated according to the following equation from the area weight Wr (g/m$^2$) and the number of layers Nr of the resin sheets, the area weight Wf (g/m$^2$) of carbon fibers and the area weight Wo (g/m$^2$) of organic fibers in the fiber mats, and the number of layers Nm of the fiber mats. In addition, the volume Tb of the sheet-like base material and the volume Ts of the porous body were measured, and the volume content of voids was calculated according to the following equation.

Weight content of the resin (C) (% by weight) = (Wr $\times$ Nr) / {(Wf $\times$ Nm) + (Wo $\times$ Nm) + (Wr $\times$ Nr)} $\times$ 100

$$\text{Volume content of voids (\% by volume)} = (Ts - Tb) / Ts \times 100$$

(2) Measurement of Average Two-Dimensional Orientation Angle Formed between Reinforcing Fibers Constituting Intersections in Porous Body

The average two-dimensional orientation angle formed between reinforcing fibers constituting intersections is measured by the following procedure. Specifically, from the two-dimensional orientation angles of all monofilaments crossing with a randomly selected monofilament, the average is measured. In cases where, for example, there are a large number of other monofilaments crossing with a certain monofilament, 20 monofilaments may be randomly selected out of the other crossing monofilaments, and then subjected to the measurement to determine an arithmetic average to be used as an alternative. This measurement is repeated a total of five times using different monofilaments as references, and the arithmetic average of the resulting values is calculated to obtain the average two-dimensional orientation angle.

(3) Measurement of Density ρ of Porous Body

Test pieces were cut from the porous body, and subjected to measurement of the apparent density of the porous body with reference to JIS K 7222 (2005). The size of each test piece was 100 mm in length, and 100 mm in width. The length, width, and thickness of the test piece were measured using a micrometer, and the volume V (mm$^3$) of the test piece was calculated from the obtained values. The mass M (g) of the cut test piece was measured by an electronic balance. The mass M and the volume V obtained were assigned to the following equation, to calculate the density ρ of the porous body.

$$\rho \ (\text{g/cm}^3) = 10^3 \times M \ / \ V$$

(4) Charpy Impact Test of Porous Body

Test pieces were cut from the porous body, and subjected to measurement of the Charpy impact strength of the porous body with reference to JIS K 7111 (2006). The test piece was cut to a size of $80 \pm 2$ mm in length, $10.0 \pm 0.2$ mm in width, and $4.0 \pm 0.2$ mm in thickness. An edgewise impact test using an unnotched test piece was carried out. The measurement was carried out for n = 3, and the arithmetic average was calculated to obtain the impact strength Ac (kJ/m$^2$).

(5) Bending Test of Porous Body

Test pieces were cut out from the porous body, and subjected to measurement of the flexural modulus with reference to the ISO178 method (1993). In the preparation of the test pieces, an arbitrary direction was regarded as the 0° direction, and the test pieces were obtained by cutting out in the four directions 0°, +45°, -45°, and 90°. For each direction, the measurement was carried out for n = 3, and the arithmetic average was calculated to obtain the flexural modulus Ec (GPa).

(6) Coefficient of Variation of Number of Carbon Fibers (A) Crossing with Organic Fibers (B)

A continuous 1-mm area was selected from five random sites of organic fibers (B), and calculation was performed according to the following equation from the number, $n_i$, of carbon fibers (A) crossing with the organic fibers (B) in the selected areas.

$$N = \frac{1}{5}\sum_{i=1}^{5} n_i$$

$$\text{Coefficient of Variation (\%)} = \frac{100}{N}\sqrt{\frac{1}{5}\sum_{i=1}^{5}(n_i - N)^2}$$

(7) Materials of Test Body

[Carbon Fibers (CF)]

A copolymer containing a polyacrylonitrile as a major component was subjected to spinning, calcination treatment, and surface oxidation treatment, to obtain continuous carbon fibers with a total single-fiber number of 12,000. The continuous carbon fibers had the following properties.

Monofilament diameter: 7 $\mu$m
Density: 1.8 g/cm$^3$
Tensile strength: 4,600 MPa
Tensile elastic modulus: 220 GPa
Tensile elongation at break: 2.1%

[PET Fibers 1]

Polyester fibers ("Tetoron" (registered trademark) 1670T-288F-702C, manufactured by Toray Industries, Inc.; fiber diameter, 23 $\mu$m; tensile strength, 1.1 GPa; tensile elongation at break, 14.0%) were used.

[PET Fibers 2]

Polyester fibers ("Tetoron" (registered trademark), manufactured by Toray Industries, Inc.; fiber diameter, 7 $\mu$m; tensile strength, 0.5 GPa; tensile elongation at break, 46%) were used.

[PET Fibers 3]

Polyester fibers ("Tetoron" (registered trademark), manufactured by Toray Industries, Inc.; fiber diameter, 10 $\mu$m; tensile strength, 0.5 GPa; tensile elongation at break, 42%) were used.

[PET Fibers 4]

Polyester fibers ("Tetoron" (registered trademark), manufactured by Toray Industries, Inc.; fiber diameter, 18 $\mu$m; tensile strength, 0.5 GPa; tensile elongation at break, 36.5%) were used.

[LCP Fibers]

Liquid crystal polyester fibers ("Siveras" (registered trademark) 1700T-288F, manufactured by Toray Industries, Inc.; fiber diameter, 23 $\mu$m; tensile strength, 3.3 GPa; tensile elongation at break, 2.8%) were used.

[Aramid Fibers]

Para-aramid fibers ("Kevlar" (registered trademark), manufactured by Toray Industries, Inc.; fiber diameter, 12 $\mu$m; tensile strength, 2.9 GPa; tensile elongation at break, 3.6%) were used.

[Resin Sheets 1]

Resin sheets 1, composed of 80% by mass unmodified polypropylene resin ("Prime Polypro" (registered trademark) J105G, manufactured by PRIME POLYMER Co, Ltd.) and 20% by mass acid-modified polypropylene resin ("ADMER" (registered trademark) QB510, manufactured by Mitsui Chemicals, Inc.), and having an area weight of 150 g/m$^2$, were prepared.

[Resin Sheets 2]

Resin sheets 2, composed of 80% by mass unmodified polypropylene resin ("Prime Polypro" (registered trademark) J105G, manufactured by PRIME POLYMER Co, Ltd.) and 20% by mass acid-modified polypropylene resin ("ADMER" (registered trademark) QB510, manufactured by Mitsui Chemicals, Inc.), and having an area weight of 200 g/m$^2$, were prepared.

[Resin Sheets 3]

Resin sheets 3, composed of polyether ketone ketone ("Kepstan" (registered trademark) 6003, manufactured by Arkema) and having an area weight of 150 g/m$^2$, were prepared.

[Resin Sheets 4]

After feeding 30 parts by mass of "jER" (registered trademark) 828 (manufactured by Mitsubishi Chemical Corporation), 35 parts by mass of "jER" (registered trademark) 1001, and 35 parts by mass of "jER" (registered trademark) 154 into a kneader, the resulting mixture was heated to 150°C with kneading, and then kneading was carried out at 150°C for 1 hour, to obtain a transparent viscous liquid. The viscous liquid was allowed to cool to 60°C with kneading, and then 3.7 parts by mass of DYCY7 (manufactured by Mitsubishi Chemical Corporation) as a hardener, 3 parts by mass of DCMU99 (manufactured by Hodogaya Chemical Co., Ltd.) as a curing accelerator, and 3 parts by mass of "MATSUMOTO MICROSPHERE" (registered trademark) M (manufactured by Matsumoto Yushi-Seiyaku Co., Ltd.) as particles were added thereto, followed by kneading at 60°C for 30 minutes, to prepare an epoxy resin composition. Resin sheets 4, composed of the epoxy resin composition and having an area weight of 150 $g/m^2$, were prepared.

[Fiber Mats 1]

The carbon fibers and the PET fibers 1 were cut to lengths of 6 mm and 13 mm, respectively, to obtain chopped carbon fibers and chopped PET fibers 1, respectively. A dispersion liquid with a concentration of 0.1% by mass composed of water and a surfactant (polyoxyethylene lauryl ether (trade name), manufactured by Nacalai Tesque, Inc.) was prepared, and fiber mats were produced using the dispersion liquid, the chopped carbon fibers, and the chopped PET fibers 1. The fiber-mat-producing apparatus comprises a cylindrical container with a diameter of 1000 mm equipped with an outlet cock at the bottom of the container, which serves as a dispersing vessel. The dispersing vessel is equipped with a stirrer attached at the top opening, and the chopped carbon fibers, the chopped PET fibers 1, and the dispersion liquid can be fed through the opening. A paper-made substrate was dried in a drying furnace at 200°C for 30 minutes, to obtain webs. These webs were stacked on each other to obtain fiber mats 1. The average fiber lengths of the carbon fibers and the PET fibers 1 in the fiber mats were 6 mm and 13 mm, respectively. The area weight of the carbon fibers was 72 $g/m^2$, and the area weight of the PET fibers 1 was 28 $g/m^2$.

[Fiber Mats 2]

Fiber mats 2 were obtained in the same manner as the fiber mats 1 except that the LCP fibers were used instead of the PET fibers 1 in the fiber mats 1. The average fiber lengths of the carbon fibers and the LCP fibers in the fiber mats were 6 mm and 13 mm, respectively. The area weight of the carbon fibers was 72 $g/m^2$, and the area weight of the LCP fibers was 28 $g/m^2$.

[Fiber Mats 3]

Fiber mats 3 were obtained in the same manner as the fiber mats 1 except that the PET fibers 2 were used instead of the PET fibers 1 in the fiber mats 1. The average fiber lengths of the carbon fibers and the PET fibers 2 in the fiber mats were 6 mm and 13 mm, respectively. The area weight of the carbon fibers was 72 $g/m^2$, and the area weight of the PET fibers 2 was 28 $g/m^2$.

[Fiber Mats 4]

Fiber mats 4 were obtained in the same manner as the fiber mats 1 except that the PET fibers 3 were used instead of the PET fibers 1 in the fiber mats 1. The average fiber lengths of the carbon fibers and the PET fibers 3 in the fiber mats were 6 mm and 13 mm, respectively. The area weight of the carbon fibers was 72 $g/m^2$, and the area weight of the PET fibers 3 was 28 $g/m^2$.

[Fiber Mats 5]

Fiber mats 5 were obtained in the same manner as the fiber mats 1 except that the PET fibers 4 were used instead of the PET fibers 1 in the fiber mats 1. The average fiber lengths of the carbon fibers and the PET fibers 4 in the fiber mats were 6 mm and 13 mm, respectively. The area weight of the carbon fibers was 72 $g/m^2$, and the area weight of the PET fibers 4 was 28 $g/m^2$.

[Fiber Mats 6]

Fiber mats 6 were obtained in the same manner as the fiber mats 2 except that the carbon fibers in the fiber mats 2 were cut to a length of 0.5 mm. The average fiber lengths of the carbon fibers and the LCP fibers in the fiber mats were 0.5 mm and 13 mm, respectively. The area weight of the carbon fibers was 72 g/m$^2$, and the area weight of the LCP fibers was 28 g/m$^2$.

[Fiber Mats 7]

Fiber mats 7 were obtained in the same manner as the fiber mats 2 except that the carbon fibers in the fiber mats 2 were cut to a length of 20 mm. The average fiber lengths of the carbon fibers and the LCP fibers in the fiber mats were 20 mm and 13 mm, respectively. The area weight of the carbon fibers was 72 g/m$^2$, and the area weight of the LCP fibers was 28 g/m$^2$.

[Fiber Mats 8]

Fiber mats 8 were obtained in the same manner as the fiber mats 2 except that the LCP fibers in the fiber mats 2 were cut to a length of 2 mm. The average fiber lengths of the carbon fibers and the LCP fibers in the fiber mats were 6 mm and 2 mm, respectively. The area weight of the carbon fibers was 72 g/m$^2$, and the area weight of the LCP fibers was 28 g/m$^2$.

[Fiber Mats 9]

Fiber mats 9 were obtained in the same manner as the fiber mats 2 except that the LCP fibers in the fiber mats 2 were cut to a length of 30 mm. The average fiber lengths of the carbon fibers and the LCP fibers in the fiber mats were 6 mm and 30 mm, respectively. The area weight of the carbon fibers was 72 g/m$^2$, and the area weight of the LCP fibers was 28 g/m$^2$.

[Fiber Mats 10]

Fiber mats 10 were obtained in the same manner as the fiber mats 1 except that the aramid fibers were used instead of the PET fibers 1 in the fiber mats 1. The average fiber lengths of the carbon fibers and the aramid fibers in the fiber mats were 6 mm and 13 mm, respectively. The area weight of the carbon fibers was 72 g/m$^2$, and the area weight of the aramid fibers was 28 g/m$^2$.

[Fiber Mats 11]

Fiber mats 11 were obtained in the same manner as the fiber mats 2 except that the chopped LCP fibers in the fiber mats 2 were in a state where some fiber bundles were left to have the original thickness. The average fiber lengths of the carbon fibers and the LCP fibers in the fiber mats were 6 mm and 13 mm, respectively. The area weight of the carbon fibers was 72 g/m$^2$, and the area weight of the LCP fibers was 28 g/m$^2$.

[Fiber Mats 12]

Fiber mats 12 were obtained in the same manner as the fiber mats 2 except that the ratio between the chopped carbon fibers and the chopped LCP fibers to be fed to the dispersing vessel in the fiber mats 2 was changed. The average fiber lengths of the carbon fibers and the LCP fibers in the fiber mats were 6 mm and 13 mm, respectively. The area weight of the carbon fibers was 39 g/m$^2$, and the area weight of the LCP fibers was 61 g/m$^2$.

[Fiber Mats 13]

The carbon fibers were cut to a length of 6 mm, to obtain chopped carbon fibers. A dispersion liquid with a concentration of 0.1% by mass composed of water and a surfactant (polyoxyethylene lauryl ether (trade name), manufactured by Nacalai Tesque, Inc.) was prepared, and fiber mats were produced using the dispersion liquid and the chopped carbon fibers. The fiber-mat-producing apparatus comprises a cylindrical container with a diameter of 1000 mm equipped with an outlet cock at the bottom of the container, which serves as a dispersing vessel. The dispersing vessel is equipped with a stirrer attached at the top opening, and the chopped carbon fibers and the dispersion liquid can be fed through the opening. A paper-made substrate was dried in a drying furnace at 200°C for 30 minutes, to obtain webs. These webs were stacked on each other to obtain fiber mats 13. The average fiber length of the carbon fibers in the fiber mats was 6 mm, and the area weight was 90 g/m$^2$.

[Fiber Mats 14]

Fiber mats 14, which had an area weight of 110 g/m$^2$, were obtained in the same manner as the fiber mats 13.

(Example 1)

The fiber mats 1 and the resin sheets 1 were arranged in the order of [resin sheet 1 / fiber mat 1 / resin sheet 1 / fiber mat 1 / resin sheet 1 / fiber mat 1 / resin sheet 1 / fiber mat 1 / resin sheet 1 / fiber mat 1 / resin sheet 1], to prepare a laminate. Subsequently, the lamination product was passed through the following steps (A) to (C), to obtain a sheet-like base material.

(A) The laminate was placed in a compression molding die cavity preheated to 180°C, and the die was closed;
(B) A pressure of 3 MPa was applied for 5 minutes, and then the cavity temperature was reduced to 50°C while the pressure was maintained.
(C) After opening the die, a sheet-like base material was taken out.

Subsequently, the material obtained was passed through the following steps (D) to (F), to obtain a porous body. The porous body obtained had the properties shown in Table 1. The porous body had higher impact strength than that of Comparative Example 1.

(D) The sheet-like base material was placed in a compression molding die cavity that was the same as in (A), preheated to 180°C. The die was closed and left to stand for 5 minutes, and then the die was opened, followed by inserting a metal spacer at the end of the die, to adjust the thickness of the molded body to 4.0 mm.
(E) The die cavity was closed again, and then the cavity temperature was reduced to 50°C while the pressure was maintained.
(F) After opening the die, the molded body was taken out.

(Example 2)

A porous body was obtained through the same steps as in Example 1 except that the fiber mats 2 were used instead of the fiber mats 1. The porous body obtained had the properties shown in Table 1. Due to the use of the organic fibers (B) having higher tensile strength, the porous body had especially high impact strength compared to Example 1.

(Example 3)

A porous body was obtained through the same steps as in Example 1 except that the fiber mats 2 were used instead of the fiber mats 1, that resin sheets 3 were used instead of the resin sheets 1, that the preheat temperature in Step (A) was 350°C, that the pressure in Step (B) was 10 MPa, and that the retention time was 10 minutes. The porous body obtained had the properties shown in Table 1. Even by the use of the resin having a higher melting point than that in Example 2, the porous body had especially high impact strength similar to Example 2.

(Example 4)

Using the resin sheets 4 instead of the resin sheets 1 in Example 1, a sheet-like base material was obtained through the following steps (A) to (C).

(A) The laminate was placed in a compression molding die cavity preheated to 60°C, and the die was closed;
(B) A pressure of 5 MPa was applied for 90 minutes.
(C) After opening the die, a sheet-like base material was taken out.

Subsequently, the material obtained was passed through the following steps (D) to (F), to obtain a porous body. The porous body obtained had the properties shown in Table 1. Even by the use of the thermosetting resin instead of the resin used in Example 2, the porous body had especially high impact strength similar to Example 2.

(D) The sheet-like base material was placed in a compression molding die cavity preheated to 60°C, and a pressure of 5 MPa was applied for 5 minutes.
Subsequently, the die was opened, and a metal spacer was inserted at the end of the die, to adjust the thickness of the porous body to 4.0 mm.

(E) The die cavity was closed again, and then the die was heated to 150°C while the pressure was maintained. Curing was then allowed to proceed for 90 minutes.
(F) After opening the die, the porous body was taken out.

(Example 5)

A porous body was obtained through the same steps as in Example 1 except that the fiber mats 11 were used instead of the fiber mats 1. The porous body obtained had the properties shown in Table 1. The porous body had higher impact strength than that of Comparative Example 1. Comparison between Example 2 and Example 5 showed that Example 2 has a lower coefficient of variation of the number of carbon fibers (A) crossing with the organic fibers (B), and had especially high impact strength.

(Example 6)

A porous body was obtained through the same steps as in Example 1 except that the fiber mat 2 was used instead of the fiber mats 1, and that the fiber mat 2 and the resin sheets 1 were arranged in the order of [resin sheet 1 / resin sheet 1 / resin sheet 1 / resin sheet 1 / resin sheet 1 / resin sheet 1 / resin sheet 1 / resin sheet 1 / fiber mat 2 / resin sheet 1 / resin sheet 1 / resin sheet 1 / resin sheet 1 / resin sheet 1 / resin sheet 1 / resin sheet 1 / resin sheet 1]. The porous body obtained had the constitution shown in Table 1. However, in Example 6, the content of the resin (C) was high, and the porous body did not expand to a thickness of 4 mm with good quality, so that evaluation of the properties was not carried out for the porous body.

(Example 7)

A porous body was obtained through the same steps as in Example 1 except that the fiber mats 6 were used instead of the fiber mats 1. The porous body obtained had the properties shown in Table 1. The porous body had higher impact strength than that of Comparative Example 1. Comparison between Example 2 and Example 8 showed that Example 2 has a longer average fiber length of the carbon fibers (A), and had especially high impact strength and flexural modulus.

(Example 8)

A porous body was obtained through the same steps as in Example 1 except that the fiber mats 7 were used instead of the fiber mats 1. The porous body obtained had the properties shown in Table 1. The porous body had higher impact strength than that of Comparative Example 1. Comparison between Example 2 and Example 9 showed that Example 2 had a shorter average fiber length of the carbon fibers (A), and has especially high impact strength and flexural modulus.

(Example 9)

A porous body was obtained through the same steps as in Example 1 except that the fiber mats 8 were used instead of the fiber mats 1. The porous body obtained had the properties shown in Table 2. The porous body had higher impact strength than that of Comparative Example 1. Comparison between Example 2 and Example 10 showed that Example 2 has a longer average fiber length of the organic fibers (B), and had especially high impact strength.

(Example 10)

A porous body was obtained through the same steps as in Example 1 except that the fiber mats 9 were used instead of the fiber mats 1. The porous body obtained had the properties shown in Table 2. The porous body had higher impact strength than that of Comparative Example 1. Comparison between Example 2 and Example 11 showed that Example 2 had a shorter average fiber length of the organic fibers (B), and especially high impact strength.

(Example 11)

A porous body was obtained through the same steps as in Example 1 except that the fiber mats 10 were used instead of the fiber mats 1. The porous body obtained had the properties shown in Table 2. The porous body had higher impact strength than that of Comparative Example 1. Comparison between Example 2 and Example 12 showed that Example 2 had especially high impact strength due to the use of the organic fibers (B) having a larger diameter.

(Example 12)

A porous body was obtained through the same steps as in Example 1 except that the fiber mats 3 were used instead of the fiber mats 1. The porous body obtained had the properties shown in Table 2. The porous body had higher impact strength than that of Comparative Example 2. Comparison between Example 1 and Example 13 showed that Example 1 had especially high impact strength due to the use of the organic fibers (B) having a larger diameter and higher tensile strength.

(Example 13)

A porous body was obtained through the same steps as in Example 1 except that the fiber mats 4 were used instead of the fiber mats 1. The porous body obtained had the properties shown in Table 2. The porous body had higher impact strength than that of Comparative Example 2. Comparison between Example 1 and Example 14 showed that Example 1 had especially high impact strength due to the use of the organic fibers (B) having a larger diameter and higher tensile strength.

(Example 14)

A porous body was obtained through the same steps as in Example 1 except that the fiber mats 5 were used instead of the fiber mats 1. The porous body obtained had the properties shown in Table 2. Comparison between Example 14 and Example 15 showed that Example 15 had especially high impact strength due to the use of the organic fibers (B) having a larger diameter.

(Comparative Example 1)

The fiber mats 13 and the resin sheets 2 were arranged in the order of [resin sheet 2 / fiber mat 13 / resin sheet 2 / fiber mat 13 / resin sheet 2 / fiber mat 13 / resin sheet 2 / fiber mat 13 / resin sheet 2], to prepare a laminate. Subsequently, the laminate was passed through the following steps (A) to (C), to obtain a sheet-like base material.

(A) The laminate was placed in a compression molding die cavity preheated to 180°C, and the die was closed;
(B) A pressure of 3 MPa was applied for 5 minutes, and then the cavity temperature was reduced to 50°C while the pressure was maintained.
(C) After opening the die, a sheet-like base material was taken out.

Subsequently, the material obtained was passed through the following steps (D) to (F), to obtain a porous body. The porous body obtained had the properties shown in Table 2.

(D) The sheet-like base material was placed in a compression molding die cavity that was the same as in (A), preheated to 180°C. The die was closed and left to stand for 5 minutes, and then the die was opened, followed by inserting a metal spacer at the end of the die, to adjust the thickness of the molded body to 4.0 mm.
(E) The die cavity was closed again, and then the cavity temperature was reduced to 50°C while the pressure was maintained.
(F) After opening the die, the molded body was taken out.

(Comparative Example 2)

A porous body was obtained through the same steps as in Example 1 except that the fiber mats 14 were used instead of the fiber mats 1. The porous body obtained had the properties shown in Table 2.

(Comparative Example 3)

A porous body was obtained through the same steps as in Example 1 except that the fiber mats 12 were used instead of the fiber mats 1. The porous body obtained had the constitution shown in Table 2. However, in Comparative Example 3, the porous body did not expand to a thickness of 4 mm with good quality, so that evaluation of the properties was not carried out for the porous body.

[Table 1]

| | | Unit | Example 1 | Example 2 | Example 3 | Example 4 | Example 5 | Example 6 | Example 7 | Example 8 |
|---|---|---|---|---|---|---|---|---|---|---|
| Composition of Porous Body | Carbon Fiber (A) | - | CF | CF | CF | CF | CF | CF | CF | CF |
| | Organic Fiber (B) | - | PET1 | LCP | LCP | LCP | LCP | LCP | LCP | LCP |
| | Resin(C) | - | PP | PP | PEKK | EP | PP | PP | PP | PP |
| | Carbon Fiber (A) Content in Reinforcing Fiber | Weight% | 72 | 72 | 72 | 72 | 72 | 72 | 72 | 72 |
| | Organic Fiber (B) Content in Reinforcing Fiber | Weight% | 28 | 28 | 28 | 28 | 28 | 28 | 28 | 28 |
| | Resin (C) Content | Weight% | 64 | 64 | 71 | 71 | 64 | 96 | 64 | 64 |
| | Content of Voids | Volume% | 66,7 | 66,7 | 66,7 | 66,7 | 66,7 | 16,7 | 66,7 | 66,7 |
| Carbon Fiber (A) | Average Fiber Length | mm | 6 | 6 | 6 | 6 | 6 | 6 | 0,5 | 20 |
| Organic Fiber (B) | Average Fiber Length | mm | 13 | 13 | 13 | 13 | 13 | 13 | 13 | 13 |
| | Diameter | $\mu$m | 23 | 23 | 23 | 23 | 23 | 23 | 23 | 23 |
| | Tensile Strength | GPa | 1,1 | 3,3 | 3,3 | 3,3 | 3,3 | 3,3 | 3,3 | 3,3 |
| | Tensile Elongation at Break | % | 14 | 2,8 | 2,8 | 2,8 | 2,8 | 2,8 | 2,8 | 2,8 |
| Properties of Porous Body | Coefficient of Variation of Number of Carbon Fibers (A) Crossing with Organic Fibers (B) | % | 8 | 9 | 9 | 9 | 66 | -Note 1) | 12 | 11 |
| | Average Two-Dimensional Orientation Angle | ° | 44 | 43 | 43 | 44 | 36 | 40 | 44 | 39 |
| | Density $\rho$ | g/cm$^3$ | 0,36 | 0,36 | 0,45 | 0,6 | 0,36 | -Note 1) | 0,36 | 0,36 |
| | Charpy Impact Strength | kJ/m$^2$ | 15 | 35 | 38 | 36 | 11 | -Note 1) | 20 | 30 |
| | Flexural Modulus | GPa | 4,6 | 4,4 | 7,4 | 5,4 | 3,6 | -Note 1) | 2,5 | 3,8 |

Note 1) No Evaluation.

[Table 2]

| | | Unit | Example 9 | Example 10 | Example 11 | Example 12 | Example 13 | Example 14 | Comparative Example 1 | Comparative Example 2 | Comparative Example 3 |
|---|---|---|---|---|---|---|---|---|---|---|---|
| Composition of Porous Body | Carbon Fiber (A) | - | CF | CF | CF | CF | CF | CF | CF | CF | CF |
| | Organic Fiber (B) | - | LCP | LCP | Aramid | PET2 | PET3 | PET4 | _Note 1) | _Note 1) | LCP |
| | Resin(C) | - | PP | PP | PP | PP | PP | PP | PP | PP | PP |
| | Carbon Fiber (A) Content in Reinforcing Fiber | Weight% | 72 | 72 | 72 | 72 | 72 | 72 | 100 | 100 | 39 |
| | Organic Fiber (B) Content in Reinforcing Fiber | Weight% | 28 | 28 | 28 | 28 | 28 | 28 | 0 | 0 | 61 |
| | Resin (C) Content | Weight% | 64 | 64 | 64 | 64 | 64 | 64 | 75 | 65 | 64 |
| | Content of Voids | Volume% | 66,7 | 66,7 | 66,7 | 66,7 | 66,7 | 66,7 | 66,7 | 66,7 | 61,3 |
| Carbon Fiber (A) | Average Fiber Length | mm | 6 | 6 | 6 | 6 | 6 | 6 | 6 | 6 | 6 |
| Organic Fiber (B) | Average Fiber Length | mm | 2 | 30 | 13 | 13 | 13 | 13 | _Note 2) | _Note 2) | 13 |
| | Diameter | μm | 23 | 23 | 12 | 7 | 10 | 18 | _Note 2) | _Note 2) | 23 |
| | Tensile Strength | GPa | 3,3 | 3,3 | 2,9 | 0,5 | 0,5 | 0,5 | _Note 2) | _Note 2) | 3,3 |
| | Tensile Elongation at Break | % | 2,8 | 2,8 | 3,6 | 46 | 42 | 36,5 | _Note 2) | _Note 2) | 2,8 |
| | Coefficient of Variation of Number of Carbon Fibers (A) Crossing with Organic Fibers (B) | % | 10 | 20 | 10 | 7 | 8 | 10 | 8 | 8 | _Note 3) |
| Properties of Porous Body | Average Two-Dimensional Orientation Angle | ° | 46 | 40 | 45 | 46 | 44 | 43 | 46 | 46 | _Note 3) |
| | Density ρ | g/cm³ | 0,36 | 0,36 | 0,36 | 0,36 | 0,36 | 0,36 | 0,35 | 0,37 | _Note 3) |
| | Charpy Impact Strength | kJ/m² | 13 | 22 | 19 | 9 | 9 | 11 | 9 | 7 | _Note 3) |
| | Flexural Modulus | GPa | 4,5 | 4,5 | 4,4 | 1,9 | 1,9 | 1,9 | 2,4 | 1,9 | _Note 3) |

Note 2) Organic Fiber (B) is not included. Note 3) No Evaluation.

DESCRIPTION OF SYMBOLS

1    Porous body
2    Carbon fiber (A)
3    Organic fiber (B)
4    Resin (C)
5    Void

**Claims**

1.  A porous body comprising:

    carbon fibers (A) (2) at more than 50% by weight and not more than 99% by weight, and organic fibers (B) (3) having a tensile elongation at break of 2.5 to 100% at not less than 1% by weight and less than 50% by weight, as reinforcing fibers; and
    a resin (C) (4), the reinforcing fibers being fixed by the resin (C), the porous body having a porosity of 10 to 95% by volume.

2.  The porous body according to claim 1, wherein intersections of the reinforcing fibers are bonded by the resin (C), and voids (5) of the porous body are formed as parts where neither the reinforcing fibers nor the resin (C) are present.

3.  The porous body according to claim 2, wherein the intersections are formed by crossing of monofilaments of the carbon fibers (A) with other fibers.

4.  The porous body according to claim 2, wherein the intersections are formed by crossing of monofilaments of the organic fibers (B) with other fibers.

5.  The porous body according to claim 2, wherein the reinforcing fibers constituting the intersections form an average two-dimensional orientation angle of 10 to 80°.

6.  The porous body according to claim 1, comprising the resin (C) at 10 to 95% by weight with respect to 5 to 90% by weight of a total of the carbon fibers (A) and the organic fibers(B).

7.  The porous body according to claim 1, having a density of 0.02 to 0.9 g/cm$^3$.

8.  The porous body according to claim 1, wherein the carbon fibers (A) have an average fiber length of 1 to 15 mm.

9.  The porous body according to claim 1, wherein the organic fibers (B) have an average fiber length of 4 to 20 mm.

10. The porous body according to claim 1, wherein the organic fibers (B) have a diameter of 15 to 50 $\mu$m.

11. The porous body according to claim 1, wherein the organic fibers (B) have a tensile strength of 1 to 6 GPa.

12. The porous body according to claim 1, wherein the organic fibers (B) have a tensile elongation at break of 2.5 to 30%.

13. The porous body according to claim 1, having a Charpy impact strength of 10 to 100 kJ/m$^2$.

14. A composite structure comprising:

    the porous body according to claim 1; and
    a fiber-reinforced plastic containing continuous reinforcing fibers,

    the fiber-reinforced plastic being placed on a surface of the porous body.

15. The porous body according to claim 1 or the composite structure according to claim 14, for use in an application selected from sporting goods, electronic device housings, and building components.

**Patentansprüche**

1.  Poröser Körper, umfassend:

    in einem Anteil von mehr als 50 Gew.-% und nicht mehr als 99 Gew.-% Kohlenstofffasern (A) (2) und nicht weniger als 1 Gew.-% und weniger als 50 Gew.-% organische Fasern (B) (3), die eine Zugdehnung bei Bruch von 2,5 bis 100 % aufweisen, als Verstärkungsfasern; und
    ein Harz (C),

    wobei die Verstärkungsfasern durch das Harz (C) fixiert sind und der poröse Körper eine Porosität von 10 bis 95 Vol.-% aufweist.

2.  Poröser Körper nach Anspruch 1, wobei Kreuzungspunkte der Verstärkungsfasern durch das Harz (C) gebunden sind und Hohlräume des porösen Körpers als Teile ausgebildet sind, in denen weder die Verstärkungsfasern noch das Harz (C) vorhanden sind.

3.  Poröser Körper nach Anspruch 2, wobei die Kreuzungspunkte durch Überkreuzung von Monofilamenten der Kohlenstofffasern (A) mit anderen Fasern gebildet sind.

4.  Poröser Körper nach Anspruch 2, wobei die Kreuzungspunkte durch Überkreuzung von Monofilamenten der organischen Fasern (B) mit anderen Fasern gebildet sind.

5.  Poröser Körper nach Anspruch 2, wobei die Verstärkungsfasern, die die Kreuzungspunkte bilden, einen durchschnittlichen zweidimensionalen Orientierungswinkel von 10 bis 80° aufweisen.

6.  Poröser Körper nach Anspruch 1, umfassend das Harz (C) in einem Anteil von 10 bis 95 Gew.-% bezogen auf eine Gesamtmenge von 5 bis 90 Gew.-% der Kohlenstofffasern (A) und der organischen Fasern (B).

7.  Poröser Körper nach Anspruch 1, der eine Dichte von 0,02 bis 0,9 g/cm$^3$ aufweist.

8.  Poröser Körper nach Anspruch 1, wobei die Kohlenstofffasern (A) eine durchschnittliche Faserlänge von 1 bis 15 mm aufweisen.

9.  Poröser Körper nach Anspruch 1, wobei die organischen Fasern (B) eine durchschnittliche Faserlänge von 4 bis 20 mm aufweisen.

10. Poröser Körper nach Anspruch 1, wobei die organischen Fasern (B) einen Durchmesser von 15 bis 50 μm aufweisen.

11. Poröser Körper nach Anspruch 1, wobei die organischen Fasern (B) eine Zugfestigkeit von 1 bis 6 GPa aufweisen.

12. Poröser Körper nach Anspruch 1, wobei die organischen Fasern (B) eine Zugdehnung bei Bruch von 2,5 bis 30 % aufweisen.

13. Poröser Körper nach Anspruch 1, der eine Charpy-Schlagzähigkeit von 10 bis 100 kJ/m$^2$ aufweist.

14. Verbundstruktur, umfassend:

    den porösen Körper nach Anspruch 1; und
    einen faserverstärkten Kunststoff, umfassend kontinuierliche
    Verstärkungsfasern,

    wobei der faserverstärkte Kunststoff auf einer Oberfläche des porösen Körpers angeordnet ist.

15. Poröser Körper nach Anspruch 1 oder die Verbundstruktur nach Anspruch 14 zur Verwendung in einem Anwendungsgebiet, ausgewählt aus Sportartikeln, Gehäusen für elektronische Geräte und Bauteilen im Bauwesen.

**Revendications**

1.  Corps poreux comprenant :

    des fibres de carbone (A) (2) à plus de 50 % en poids et ne dépassant pas 99 % en poids, et des fibres organiques (B) (3) ayant un allongement en traction à la rupture de 2,5 à 100 % à au moins 1 % en poids et moins de 50 % en poids, en tant que fibres de renfort ; et
    une résine (C) (4),

    les fibres de renfort étant fixées par la résine (C), le corps poreux ayant une porosité de 10 à 95 % en volume.

2.  Corps poreux selon la revendication 1, dans lequel les intersections des fibres de renfort sont liées par la résine (C), et les vides (5) du corps poreux sont formés en tant que parties où ni les fibres de renfort ni la résine (C) ne sont présentes.

3.  Corps poreux selon la revendication 2, dans lequel les intersections sont formées en croisant des monofilaments des fibres de carbone (A) avec d'autres fibres.

4.  Corps poreux selon la revendication 2, dans lequel les intersections sont formées par le croisement de monofilaments des fibres organiques (B) avec d'autres fibres.

5.  Corps poreux selon la revendication 2, dans lequel les fibres de renforts constituant les intersections forment un angle d'orientation bidimensionnelle de 10 à 80°.

6.  Corps poreux selon la revendication 1, comprenant la résine (C) à 10 à 95 % en poids par rapport à 5 à 90 % en poids d'un total des fibres de carbone (A) et des fibres organiques (B).

7.  Corps poreux selon la revendication 1, ayant une masse volumique de 0,02 à 0,9 g/cm$^3$.

8.  Corps poreux selon la revendication 1, dans lequel les fibres de carbone (A) ont une longueur de fibre moyenne de 1 à 15 mm.

9.  Corps poreux selon la revendication 1, dans lequel les fibres organiques (B) ont une longueur de fibre moyenne de 4 à 20 mm.

10. Corps poreux selon la revendication 1, dans lequel les fibres organiques (B) ont un diamètre de 15 à 50 $\mu$m.

11. Corps poreux selon la revendication 1, dans lequel les fibres organiques (B) ont une résistance à la traction de 1 à 6 GPa.

12. Corps poreux selon la revendication 1, dans lequel les fibres organiques (B) ont un allongement en traction à la rupture de 2,5 à 30 %.

13. Corps poreux selon la revendication 1, ayant une énergie de rupture Charpy de 10 à 100 kJ/m$^2$.

14. Structure composite comprenant :

    le corps poreux selon la revendication 1 ; et
    un plastique renforcé de fibres contenant des fibres de renfort continues, le plastique renforcé de fibres étant placé sur une surface du corps poreux.

15. Corps poreux selon la revendication 1 ou structure composite selon la revendication 14, pour une utilisation dans une application choisie parmi les articles de sport, les boîtiers de dispositifs électroniques et les composants de construction.

[Fig. 1]

**EP 4 442 440 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017110528 A
- WO 2018117188 A
- JP 2018104482 A